# EUROPÄISCHE PATENTSCHRIFT

(11) **EP 1 334 018 B1**
(45) Veröffentlichungstag und Bekanntmachung des Hinweises auf die Patenterteilung: **29.11.2006**
(21) Anmeldenummer: 01982451.5
(22) Anmeldetag: 31.10.2001
(51) Int. Cl.: B61D 15/06, B60R 19/40

(54) **STOSSENERGIE-VERZEHRVORRICHTUNG FÜR FAHRZEUGE**
IMPACT ENERGY ABSORBING DEVICE FOR VEHICLES
SYSTEME D'ABSORPTION D'ENERGIE DE CHOC POUR VEHICULES

(30) Priorität: 03.11.2000 DE 10055876
(43) Veröffentlichungstag der Anmeldung: 13.08.2003
(73) Patentinhaber: Bombardier Transportation GmbH, 13627 Berlin (DE)
(72) Erfinder: RISTOW, Lutz, 89160 Tomerdingen (DE); NOHR, Matthias, Dr., 73728 Esslingen (DE)
(74) Vertreter: Cohausz & Florack
(86) Internationale Anmeldenummer: PCT/EP2001/012610
(87) Internationale Veröffentlichungsnummer: WO 2002/036405

(56) Entgegenhaltungen:
- DE-U- 9 400 940
- GB-A- 2 020 234
- US-A- 5 810 427
- US-A- 6 031 449

## Beschreibung

Die Erfindung betrifft Fahrzeuge gemäß den Oberbegriffen der Ansprüche 1 oder 7 sowie eine Stoßenergie-Verzehrvorrichtung gemäß dem Oberbegriff des Anspruchs 20. Die Erfindung ist geeignet für - aber nicht beschränkt auf - den Einsatz in Schienenfahrzeugen.

Triebzüge ohne Lokomotive wie beispielsweise der ICE sind nach heutigem Stand der Technik starr verbundene Zugverbände, deren Energieabsorptionseinrichtungen sich in den Kupplungen und/oder Puffern an den Zugenden und zwischen den einzelnen Wagen befinden. Für den Fall eines Zusammenstoßes mit einem Hindernis erfolgt nach Ausnutzung der Kupplungsabsorber ein Aufeinanderprallen der Wagen bzw. eine Deformation im Frontbereich. Als Folge sind hohe Insassenbeschleunigung mit entsprechend schweren Personenschäden und erhebliche strukturelle Schäden an den Wagen bzw. Zügen zu erwarten. In Zukunft werden immer höhere Anforderungen an die Crash-Sicherheit von z. B. elektrisch betriebenen oder dieselbetriebenen Triebzügen gestellt. Die Größe der zu vernichtenden Crash-Energie ist durch die Parameter Masse und Geschwindigkeit bestimmt. Die zu leistende Formänderungsarbeit ergibt sich aus den Parametern Kraft und Weg. Die Kraft ist in der Regel durch historisch definierte Lastannahmen (UIC 566/ DIN EN 12663) wie z. B. 1500 kN Druckkraft auf den Kupplungsträger begrenzt. Eine möglichst gleichmäßige Verteilung der Kraft auf den Wagenquerschnitt hat konstruktive Grenzen und ist nur eingeschränkt möglich. Den Wagenkasten bzw. dessen Querschnitt für größere Lastannahmen zu dimensionieren hat sowohl wirtschaftliche Grenzen, als auch Grenzen hinsichtlich des Gewichtes.

Bisher werden fest montierte Verzehrvorrichtungen am Schienenfahrzeug befestigt, die sich reversibel oder irreversibel verformen und dabei die Crash-Energie vernichten, d. h. es wird Verformungsarbeit geleistet und die kinetische Energie in Wärme umgewandelt. Bei federnden Verzehrvorrichtungen, z. B. Puffern, wird die Crash-Energie in Federelementen gespeichert und anschließend ebenfalls in Wärme umgewandelt.

Nachteil dieser Lösungen ist die begrenzte Aufnahmefähigkeit von zu vernichtender Stoßenergie. Eine Erhöhung der Aufnahmefähigkeit ist zum einen durch das Gewicht und zum anderen durch die Dimensionen der Verzehrvorrichtungen und des Fahrzeugs begrenzt. Dies wäre zudem mit erhöhten Kosten bei der Herstellung und im Betrieb verbunden.

Weiterhin begrenzt das Außendesign den Bauraum für Verzehrvorrichtungen oder es muss das Außendesign mit. Rücksicht auf die Verzehrvorrichtungen verändert werden. In der DE 197 05 226 A1 wird eine Überstoß-Energieverzehreinrichtung für Schienenfahrzeuge beschrieben, bei der über einen Auslösemechanismus Überstoß-Energieverzehrelemente gegen die Stoßrichtung nach vorn außerhalb der stirnseitigen Fahrzeugkontur .. verschoben wird und mit gleichartigen Überstoß-Energieverzehrelementen von gekuppelten Nachbarfahrzeugen zur Anlage gelangt. Nachteilig hierbei ist, dass der Weg, den die Energieverzehrelemente gegen die Stoßrichtung verschoben werden können, begrenzt ist. Sie beträgt maximal dem Abstand zwischen zwei gekuppelten, benachbarten Fahrzeugen im Bereich der Energieverzehrelemente. Dadurch ist auch die Aufnahmefähigkeit von zu vernichtender Stoßenergie stark begrenzt. Die DE 32 28 941 A1 beschreibt eine, einer Mittelpufferkupplung nachgeschaltete Vorrichtung zur Aufnahme übergroßer Stöße. Dabei ist ein oberhalb der Mittelpufferkupplung befestigter Kletterschutz an einer Stoßstange befestigt, die unter Zwischenschaltung einer Überstoßsicherung an einem Untergestell befestigt ist und über einen.Steg die Mittelpufferkupplung trägt. Die Stoßfläche des Kuppelkopfes überragt die Stoßfläche des Kletterschutzes um einen definierten Abstand, der der Tiefe des Einstauchens der Vorrichtung entspricht. Der Abstand des Kletterschutzes zur Stirnseite des Fahrzeuges ist größer als die Tiefe des Einstauchens der Uberstoßsicherung. Nachteilig hierbei ist die geringe Aufnahmefähigkeit von zu vernichtender Stoßenergie. Die DE 36 32 578 A1 offenbart eine Pufferstoß-Energieverzehreinrichtung, insbesondere für Stadtverkehrs-Schienenfahrzeuge, mit einer primären, in eine Mittelpufferkupplung integrierten, die beim Fahr- und Rangierbetrieb auftretenden Pufferkräfte absorbierenden Energieverzehreinrichtung und einer sekundären, die aus überhöhten Auflaufastößen resultierende Aufstoßenergie absorbierende Energieverzehreinrichtung. Dabei ist ein horizontaler, im wesentlichen gerader Kupplungsquerträger längsverschieblich im Fahrzeug-Kopfstück angeordnet, der in Fahrzeuglängsachse gelenkig die Mittelpufferkupplung und seitlich, nahe seinen Querenden die sekundäre Energieverzehreinrichtung trägt. Nachteilig ist auch hierbei die geringe Aufnahmefähigkeit von zu vernichtender Stoßenergie. Die Absorber können einem Crashfall nicht angepasst werden, sondern erfüllen lediglich spezifische Anforderungen.

Aus der US 6,031,449 ist weiterhin ein Schienenfahrzeug bekannt, bei dem vor einem drohenden Zusammenstoß mit einem Hindernis an der Frontpartie ein Airbag zur Absorption der Stoßenergie entfaltet wird'. Auch hier ist keine Anpassung des Airbags an unterschiedliche Crashfälle vorgesehen.

Aus der US 5,810,427 ist schließlich ein Fahrzeug bekannt, bei dem eine Frontpartie entgegen der Stoßrichtung ausgefahren wird und der so entstehende Zwischenraum mit Energieabsorptionselementen gefüllt wird. Dabei kann die Absorptionscharakteristik eines mit mehreren Kammern versehenen Airbags, der eines der Energieabsorptionselemente bildet, durch vergleichsweise aufwändige Variation des Drucks in den Kammern verstellt werden.

Der vorliegenden Erfindung liegt vor diesem Hintergrund die Aufgabe zu Grunde, ein gattungsgemäßes Fahrzeug zur Verfügung zu stellen, welches eine einfache Anpassung der Stoßenergieabsorption an unterschiedliche Crashfälle ermöglicht.

Diese Aufgabe wird durch ein Fahrzeug gemäß den Merkmalen des Anspruchs 1 gelöst. Sie wird ebenfalls durch ein Fahrzeug gemäß den Merkmalen des Anspruchs 7 und der Stoßenergie - Verzehrvorrichtung nach Anspruch 20 gelöst.

Zweckmäßige Ausgestaltungen und Weiterbildungen der Erfindung sind in den Unteransprüchen angegeben.

Alle bisher bekannten Stoßenergie-Verzehrelemente bzw. Systeme machen keinen Unterschied zwischen Dimension und Funktion am Zugende und zwischen gekuppelten Wagen eines Zuges. Als Arbeitsweg für die bei einem Crash zu vernichtende Crash-Energie steht in der Regel nur der Weg zwischen Kupplungsfläche und/oder Pufferfläche und dem Beginn des inneren Führerraumes zur Verfügung. Eine Verlängerung des Kopfes vor der Führerkabine. beeinträchtigt das Sichtfeld des Fahrers und verlängert den Zug, ohne die Transportleistung zu verbessern. Um einen größeren Arbeitsweg zu ermöglichen, ohne die Kraft erhöhen zu müssen, wird daher erfindungsgemäß der Energieverzehrvorgang räumlich verlagert. Nachdem die Höhe des Betrages der absorbierbaren Energie E durch die Parameter Kraft F und Weg s nach der Gleichung E = F · s bestimmt und das maximal ertragbare Kraftniveau für Schienenfahrzeuge limitiert ist, zielt die Erfindung auf eine effiziente Nutzung bereits vorhandener Abstände zwischen den Wagenkästen und/oder die Verlängerung des ausnutzbaren Weges für Absorptionselemente im Frontbereich des Schienenfahrzeugs.

Die erfindungsgemäße Stoßenergie-Verzehrvorrichtung weist Mittel zur Stoßenergieabsorption auf, wobei diese aktivierbar oder deaktivierbar sind.

In einer Ausführungsform werden beim Aktivieren der Mittel zur Stoßabsorption eine Frontpartie des Fahrzeugs entgegen der Stoßrichtung, insbesondere entgegen der Fahrtrichtung ausgefahren, ausgeschwenkt und/oder ausgeschoben und der durch das Ausfahren, Ausschwenken und/oder Ausschieben der Frontpartie erzeugte Zwischenraum anschließend mit Energieabsorptionselementen mindestens teilweise, insbesondere vollständig gefüllt.

In einer weiteren Ausführungsform, die auch mit der vorgenannten Ausführungsform kombinierbar ist, werden beim Aktivieren der Mittel zur Stoßabsorption mindestens zwischen zwei benachbarten und beabstandeten Teilen des Fahrzeuges, insbesondere zwischen zwei Wagen eines Zuges vorhandene Zwischenräume mindestens teilweise, insbesondere vollständig mit Energieabsorptionselementen gefüllt.

Die Erfindung beschränkt sich nicht auf eine spezielle Ausführungsform der Verzehrelemente. Möglich sind sowohl reversible als auch irreversibel arbeitende, primäre und/oder sekundäre Verzehrelemente.

Die Vorteile der Erfindung bestehen darin, dass höhere Anprallenergiebeträge durch Zurverfügungstellung eines erhöhten Energieabsorptionsweges absorbierbar sind. Weiterhin kann eine höhere Stoßenergie über den Zug verteilt absorbiert werden. Es erfolgt eine Anpassung auf den detektierten Crashfall. Die Insassensicherheit wird infolgedessen erhöht. Die Wagenkastenstruktur wird weniger oder gar nicht beschädigt, so dass eine anschließende Reparaturzeit durch einfachen Austausch von Absorbermodulen, die die Energieabsorptionselemente beinhalten, verkürzt wird. Weiterhin vorteilhaft ist, dass an Triebzügen für den Personenverkehr die zukünftigen Crashanforderungen erfüllt werden, ohne den Kopf dauerhaft verlängern zu müssen. Ein Nachrüsten von Fahrzeugen ist ebenfalls möglich. Ein modularer Aufbau ermöglicht den Einsatz beispielsweise an Regionalbahnen wie auch an ICE-Fahrzeugen.

Die Erfindung wird anhand von Ausführungsbeispielen nachfolgend näher erläutert.

### Beispiel 1:

Die Frontpartie eines Triebzuges wird im Gefahrenfall entgegen der Fahrtrichtung um eine Distanz von etwa 500 mm ausgefahren. Der durch das Ausfahren der Frontpartie erzeugte Zwischenraum wird anschließend mit Energieabsorptionselementen mindestens teilweise, insbesondere vollständig gefüllt. Dadurch sind höhere Anprallenergiebeträge durch Zurverfügungstellung eines erhöhten Energieabsorptionsweges absorbierbar. Es erfolgt eine Anpassung auf den detektierten Crashfall. Die Insassensicherheit wird infolgedessen erhöht. Die Wagenkastenstruktur wird weniger oder gar nicht beschädigt, so dass eine anschließende Reparaturzeit durch einfachen Austausch von Absorbermodulen, die die Energieabsorptionselemente beinhalten, verkürzt wird.

Die ausfahrbare Frontpartie kann lediglich Puffer oder Teile des Wagenkastens des Kopfmoduls beinhalten. In diesem Ausführungsbeispiel wird die gesamte Frontpartie ab Windschutzscheibenunterkante inklusive der unter der Frontverkleidung angebrachten Komponenten wie beispielsweise Beleuchtung, Horn, Bugklappenschwenkmechanik, nicht jedoch die Kupplung mittels Führungselementen und Aktuatoren entgegen der Fahrtrichtung ausgefahren. Gleichzeitig werden in den entstandenen Zwischenraum Absorberelemente platziert, die im konkreten Anwendungsfall in Pufferhöhe liegen.

Die Frontpartie eines Zuges beschränkt sich nicht nur auf den in Fahrtrichtung vorderen Teil des Zuges, da auch ein Crash auf den in Fahrrichtung hinteren Teil des Zuges erfolgen kann.

### Beispiel 2:

Zusätzlich oder alternativ dazu werden mindestens zwischen zwei benachbarten Wagen des Zuges vorhandene , Zwischenräume mindestens teilweise, insbesondere vollständig mit Energieabsorptionselementen gefüllt. Dadurch kann eine höhere Stoßenergie über den Zug verteilt absorbiert werden. Es ist eine Adaption auf den vorliegenden Crash-Fall durch das gezielte Aktivieren bestimmter Energieabsorptionselemente und das gezielte Deaktivieren der anderen Energieabsorptionselemente möglich. Auch hierbei wird die Insassensicherheit infolgedessen erhöht. Die Wagenkastenstruktur wird weniger oder gar nicht beschädigt, so dass eine anschließende Reparaturzeit durch einfachen Austausch von Absorbermodulen, die die Energieabsorptionselemente beinhalten, verkürzt wird.

Um dem dynamischen Verhalten des Gesamtsystems gerecht zu werden, erfolgt der Einsatz der Energieabsorptionselemente selektiv, d. h. in den zur Anprallseite näher liegenden Zwischenräumen wird eine höhere Anzahl von Energieabsorptionselementen in die Zwischenräume verfahren und/oder ein höheres Kraftniveau der Energieabsorptionselemente bereitgestellt als im Endbereich des Zuges. Somit erfolgt ein gleichmäßiges Abbremsen aller dem Zug zugehörigen Wagen bei verringertem Beschleunigungsniveau und eine gleichmäßige Verteilung der zu absorbierenden kinetischen Energie.

In diesem Ausführungsbeispiel befinden sich vier ausfahrbare, ausschwenkbare und/oder ausschiebbare rohrförmige Energieabsorptionselemente in der Nähe der vier Ecken an der Wagenkastenkastenstirnwand eines jeden Wagens. Das selektive Einsetzen der Energieabsorptionselemente erfolgt hier bei dadurch, dass je nach Bedarf nur ein Teil oder alle vier Energieabsorptionselemente in die Zwischenräume positioniert werden. Beispielsweise werden nach dem ersten Wagen alle vier Energieabsorptionselemente aktiviert in der Mitte des Zuges lediglich zwei und am Ende des Zuges genügt die Kupplung zur Aufnahme von Stoßenergie.

Es ist auch möglich, die Aktivierung der Zahl der Energieabsorptionselemente und/oder deren Kraftniveau an die Geschwindigkeit des Zuges und/oder die Geschwindigkeit der Relativbewegung zwischen Zug und crashauslösendem Hindernis, z. B. einem entgegenkommenden Fahrzeug anzupassen. Beispielsweise werden bei niedrigen Geschwindigkeiten keines oder nur ein geringer Teil der ausfahrbaren, ausschwenkbaren und/oder ausschiebbaren Energieabsorptionselemente aktiviert, während bei mittleren Geschwindigkeiten ein Teil der verfahrbaren Energieabsorptionselemente in die Zwischenräume gelangen. Bei hohen Geschwindigkeiten werden ein großer Teil oder alle Energieabsorptionselemente aktiviert.

Beispiel für derartige aktivierbare Energieabsorptionselemente sind neben verschiebbaren Energieabsorptionselementen schwenkbare Energieabsorptionselemente. Das Energieabsorptionselement wird dabei mit Hilfe einer Hebelkinematik in seiner Position schwenkbar gelagert. So ergibt sich die Möglichkeit, das Energieabsorptionselement in einen vorhandenen Bauraum, beispielsweise im oder am Wagenkasten zu integrieren. In dieser Position ist das Energieabsorptionselement deaktiviert. Bei Bedarf wird das Energieabsorptionselement in eine Position geschwenkt, in der das Energieabsorptionselement, insbesondere ein Rohr-Energieabsorptionselement axial die wirkende Kraft aufnehmen kann. Das schwenkbare Energieabsorptionselement wird von einer Bewertungslogik aktiviert, die gespeist wird mit Daten des aktuellen Fahrzustandes, der Umfelderkennung, insbesondere der Hinderniserkennung, Fahrweginformationen und/oder von in der Nähe befindlichen Fahrzeugen. Das schwenkbare Energieabsorptionselement ist ein reversibel zu betätigendes Energieabsorptionselement, d. h. bei Nichtgebrauch oder einer Fehlauslösung kann das Energieabsorptionselement wieder in die passive Position geschwenkt werden. Das Fahrzeug kann dann seine Fahrt fortsetzen. Um im Crashfall eine Führung der gegenüberstehenden Rohr-Energieabsorptionselemente zu erzielen, sind die aneinanderstoßenden Stirnseiten der Rohr-Energieabsorptionselemente so geformt, dass ein Formschluss bei Berührung erreicht wird.

## Patentansprüche

1. Fahrzeug, insbesondere Schienenfahrzeug, mit einer Stoßenergie-Verzehrvorrichtung, die Mittel zur Stoßenergieabsorption aufweist, die aktivierbar oder deaktivierbar sind, eine Anzahl von Energieabsorptionselementen umfassen und derart ausgebildet sind, dass beim Aktivieren der Mittel zur Stoßenergieabsorption eine Frontpartie des Fahrzeugs entgegen der Stoßrichtung ausgefahren, ausgeschwenkt und/oder ausgeschoben wird und der durch das Ausfahren, Ausschwenken und/oder Ausschieben der Frontpartie erzeugte Zwischenraum mit Energieabsorptionselementen mindestens teilweise gefüllt wird , **dadurch gekennzeichnet, dass** die Energieabsorptionselemente derart selektiv aktivierbar sind, dass die Anzahl der aktivierten Energieabsorptionselemente an einen detektierten Crashfall anpassbar ist.

2. Fahrzeug nach Anspruch 1, **dadurch gekennzeichnet, dass** es eine Anzahl von Fahrzeugteilen, insbesondere Wagen, umfasst und die Mittel zur Stoßenergieabsorption derart ausgebildet sind, dass beim Aktivieren der Mittel zur Stoßenergieabsorption mindestens zwischen zwei benachbarten und beabstandeten Fahrzeugteilen des Fahrzeuges vorhandene Zwischenräume mindestens teilweise mit Energieabsorptionselementen gefüllt werden.

3. Fahrzeug nach Anspruch 1 oder 2, **dadurch gekennzeichnet, dass** beim Aktivieren der Mittel zur Stoßenergieabsorption die Frontpartie um eine Distanz zwischen 100 mm und 1000 mm, vorzugsweise etwa 500 mm, insbesondere mittels Führungselementen und Aktuatoren ausgefahren, ausgeschwenkt und/oder ausgeschoben wird.

4. Fahrzeug nach einem der vorhergehenden Ansprüche, **dadurch gekennzeichnet, dass** die ausfahrbare, ausschwenkbare und/oder ausschiebbare Frontpartie Puffer und/oder Teile des Wagenkastens des Kopfmoduls beinhaltet.

5. Fahrzeug nach einem der vorhergehenden Ansprüche, **dadurch gekennzeichnet, dass** die ausfahrbare Frontpartie die Frontverkleidung und die Signalelemente, nicht jedoch die Frontkupplung beinhaltet.

6. Fahrzeug nach einem der vorhergehenden Ansprüche, **dadurch gekennzeichnet, dass** die ausfahrbare Frontpartie ab Windschutzscheibenunterkante die Frontverkleidung sowie die darunter angebrachten Komponenten, insbesondere Beleuchtung, Horn, Bugklappenschwenkmechanik beinhaltet.

7. Fahrzeug, insbesondere Schienenfahrzeug, mit einer Anzahl von Fahrzeugteilen, insbesondere Wagen, und mit einer Stoßenergie-Verzehrvorrichtung, die Mittel zur Stoßenergieabsorption aufweist, die aktivierbar oder deaktivierbar sind, eine Anzahl von Energieabsorptionselementen umfassen und derart ausgebildet sind, dass beim Aktivieren der Mittel zur Stoßenergieabsorption mindestens zwischen zwei benachbarten und beabstandeten Teilen des Fahrzeuges vorhandene Zwischenräume mindestens teilweise mit Energieabsorptionselementen gefüllt sind, **dadurch gekennzeichnet, dass** die Energieabsorptionselemente derart selektiv aktivierbar sind, dass die Anzahl der aktivierten Energieabsorptionselemente an einen detektierten Crashfall anpassbar ist.

8. Fahrzeug nach einem der vorhergehenden Ansprüche, **dadurch gekennzeichnet, dass** es eine Anzahl von benachbarten Fahrzeugteilen, insbesondere Wagen, umfasst, zwischen denen Zwischenräume liegen, und dass in den zur Anprallseite näher liegenden Zwischenräumen eine höhere Anzahl von Energieabsorptionselementen in die Zwischenräume ausgefahren, ausgeschwenkt und/oder ausgeschoben sind und/oder ein höheres Kraftniveau der Energieabsorptionselemente bereitgestellt werden als im Endbereich des Schienenfahrzeugs.

9. Fahrzeug nach einem der vorhergehenden Ansprüche, **dadurch gekennzeichnet, dass** die Aktivierung der Zahl der Energieabsorptionselemente und/oder deren Kraftniveau an die Geschwindigkeit des Schienenfahrzeugs und/oder die Geschwindigkeit der Relativbewegung zwischen Schienenfahrzeug und crashauslösendem Hindernis, z. B. einem entgegenkommenden Fahrzeug, angepasst ist.

10. Fahrzeug nach einem der vorhergehenden Ansprüche, **dadurch gekennzeichnet, dass** bei niedrigen Geschwindigkeiten keines oder nur ein geringer Teil der Energieabsorptionselemente aktiviert sind und/oder bei mittleren Geschwindigkeiten ein Teil der Energieabsorptionselemente aktiviert sind und/oder bei hohen Geschwindigkeiten alle oder ein großer Teil der Energieabsorptionselemente aktiviert sind.

11. Fahrzeug nach einem der vorhergehenden Ansprüche, **dadurch gekennzeichnet, dass** mindestens eines der Energieabsorptionselemente mit Hilfe einer Hebelkinematik in seiner Position schwenkbar gelagert ist.

12. Fahrzeug nach Anspruch 11, **dadurch gekennzeichnet, dass** das Energieabsorptionselement beim Aktivieren in eine Position schwenkbar ist, in der das Energieabsorptionselement, insbesondere ein Rohr-Energieabsorptionselement, axial die wirkende Kraft aufnehmen kann.

13. Fahrzeug nach einem der vorhergehenden Ansprüche, **dadurch gekennzeichnet, dass** das Energieabsorptionselement im deaktivierten Zustand in einen vorhandenen Bauraum, insbesondere im oder am Wagenkasten, integriert ist.

14. Fahrzeug nach einem der vorhergehenden Ansprüche, **dadurch gekennzeichnet, dass** mindestens eines der Energieabsorptionselemente ein reversibel zu betätigendes Energieabsorptionselement ist.

15. Fahrzeug nach einem der vorhergehenden Ansprüche, **dadurch gekennzeichnet, dass** die Aktivierung der Mittel zur Stoßenergieabsorption mittels Schalter erfolgt.

16. Fahrzeug nach einem der vorhergehenden Ansprüche, **dadurch gekennzeichnet, dass** die Aktivierung der Mittel zur Stoßenergieabsorption mittels Schaltvorrichtung erfolgt, die mit vorhandenen Sicherheitssystemen, insbesondere Airbag und/oder Bremsassistent, gekoppelt ist.

17. Fahrzeug nach einem der vorhergehenden Ansprüche, **gekennzeichnet durch** Mittel zur Erkennung eines bevorstehenden Crashs und Bereitstellung entsprechender Daten, Mittel zur Bewertung der Daten, wobei in Abhängigkeit der Bewertung der Daten die Mittel zur Stoßenergieabsorption aktivierbar oder deaktivierbar sind.

18. Fahrzeug nach Anspruch 17, **dadurch gekennzeichnet, dass** die Mittel zur Erkennung eine Sensorik zur Erfassung von Daten des aktuellen Fahrzustandes, der Umfelderkennung, insbesondere der Hinderniserkennung, Fahrweginformationen und/oder von in der Nähe befindlichen Fahrzeugen, umfassen.

19. Fahrzeug nach Anspruch 17 oder 18, **dadurch gekennzeichnet, dass** die Mittel zur Bewertung eine Bewertungslogik umfassen, die die Daten auswertet, die Situation bewertet und gegebenenfalls die Mittel zur Stoßenergieabsorption auslöst.

20. Stoßenergie-Verzehrvorrichtung für ein Fahrzeug, insbesondere ein Schienenfahrzeug, die Mittel zur Stoßenergieabsorption aufweist, die aktivierbar oder deaktivierbar sind, eine Anzahl von Energieabsorptionselementen umfassen und derart ausgebildet sind, dass beim Aktivieren der Mittel zur Stoßenergieabsorption mindestens zwischen zwei benachbarten und beabstandeten Teilen des Fahrzeuges vorhandene Zwischenräume mindestens teilweise mit Energieabsorptionselementen gefüllt sind, **dadurch gekennzeichnet, dass** die Energieabsorptionselemente derart selektiv aktivierbar sind, dass die Anzahl der aktivierten Energieabsorptionselemente an einen detektierten Crashfall anpassbar ist.

## Claims

1. Vehicle, in particular a rail-bound vehicle, with an impact-energy dissipation device, which has means of impact-energy absorption which are capable of being activated or deactivated, include a number of energy absorption elements and are designed in such a way that, upon activation of the means of impact-energy absorption, a front part of the vehicle is moved out, swivelled out and/or pushed out against the impact direction, and the intermediate space created by the moving out, swivelling out and/or pushing out of the front part is filled at least partially with energy absorption elements, **characterised in that** the energy absorption elements can be activated selectively in such a manner that the number of the activated energy absorption elements can be adapted to a detected crash situation.

2. Vehicle according to claim 1, **characterised in that** it comprises a number of vehicle parts, in particular carriages, and the means of impact-energy absorption are designed in such a manner that, upon activation of the means of impact-energy absorption, intermediate spaces existing at least between two neighbouring and spaced vehicle parts of the vehicle are filled at least partially with energy absorption elements.

3. Vehicle according to claim 1 or 2, **characterised in that**, upon activation of the means of impact-energy absorption, the front part is moved out, swivelled out and/or pushed out by a distance between 100 mm and 1000 mm, preferably by about. 500 mm, in particular by means of guide elements and actuators.

4. Vehicle according to any one of the preceding claims, **characterised in that** the front part capable of being moved out, swivelled out and/or pushed out comprises buffers and/or parts of the carriage body of the head module.

5. Vehicle according to any one of the preceding claims, **characterised in that** the front part capable of being moved out contains the front cowling and the signal elements, but not the front coupling.

6. Vehicle according to any one of the preceding claims, **characterised in that** the front part capable of being moved out, from the lower edge of the windscreen, comprises the front cowling and the components installed thereunder, in particular lighting, horn, nose cap swivelling mechanism.

7. Vehicle, in particular rail-bound vehicle, with a number of vehicle parts, in particular carriages, and with an impact-energy dissipation device having means of impact-energy absorption which can be activated or deactivated, include a number of energy absorption elements and are designed in such a manner that, upon activation of the means of impact-energy absorption, intermediate spaces existing at least between two neighbouring and spaced parts of the vehicle are filled at least partially with energy absorption elements, **characterised in that** the energy absorption elements can be activated selectively in such a manner that the number of the activated energy absorption elements can be adapted to a detected crash situation.

8. Vehicle according to any one of the preceding claims, **characterised in that** it includes a number of neighbouring vehicle parts, in particular carriages, between which intermediate spaces are located, and that, in the intermediate spaces located closer to the impact side, a greater number of energy absorption elements are moved out, swivelled out and/or pushed out into the intermediate spaces and/or a higher force level of the energy absorption elements is made available than in the end area of the rail-bound vehicle.

9. Vehicle according to any one of the preceding claims, **characterised in that** the activation of the number of energy absorption elements and/or their force level is adapted to the speed of the rail-bound vehicle and/or the speed of the relative motion between the rail-bound vehicle and the obstruction giving rise to a crash, e.g. an oncoming vehicle.

10. Vehicle according to any one of the preceding claims, **characterised in that** at slow speeds none or only a small part of the energy absorption elements are activated and/or at average speeds a part of the energy absorption elements is activated and/or at high speeds all or a large part of the energy absorption elements are activated.

11. Vehicle according to any one of the preceding claims, **characterised in that** at least one of the energy absorption elements is placed in its position in a swivelling manner with the aid of leverage kinematics.

12. Vehicle according to claim 11, **characterised in that** the energy absorption element, upon activation, can be swivelled into a position in which the energy absorption element, in particular a tubular energy absorption element, is able to take up the acting force axially.

13. Vehicle according to any one of the preceding claims, **characterised in that** the energy absorption element, in the deactivated state, is integrated into an existing assembly space, in particular in or on the carriage body.

14. Vehicle according to any one of the preceding claims, **characterised in that** at least one of the energy absorption elements is an energy absorption element to be actuated reversibly.

15. Vehicle according to any one of the preceding claims, **characterised in that** the activation of the means of impact-energy absorption takes place by means of a switch.

16. Vehicle according to any one of the preceding claims, **characterised in that** the activation of the means of impact-energy absorption takes place by means of a switching device, which is coupled with existing safety systems, in particular an airbag and/or a braking assistant.

17. Vehicle according to any one of the preceding claims, **characterised by** means for the detection of an impending crash and the preparation of corresponding data, means for the evaluation of the data, whereby the means of impact-energy absorption can be activated or deactivated in dependence on the evaluation of the data.

18. Vehicle according to claim 17, **characterised in that** the means of detection comprise a sensor arrangement for the acquisition of data on the current travel status, recognition of the environment, in particular recognition of obstructions, travel-route information and/or vehicles located in the vicinity.

19. Vehicle according to claim 17 or 18, **characterised in that** the means of evaluation include an evaluation logic, evaluating the data, assesseing the situation and, if need be, triggering the means of impact-energy absorption.

20. Impact-energy dissipation device for a vehicle, in particular a rail-bound vehicle, having means of impact-energy absorption which can be activated or deactivated, include a number of energy absorption elements and are designed in such a manner that, upon activation of the means of impact-energy absorption, intermediate spaces existing at least between two neighbouring and spaced parts of the vehicle are filled at least partially with energy absorption elements, **characterised in that** the energy absorption elements can be activated selectively in such a manner that the number of the activated energy absorption elements can be adapted to a detected crash situation.

## Revendications

1. Véhicule, en particulier véhicule sur rail, comportant un dispositif de consommation d'énergie de choc, qui présente des moyens d'absorption d'énergie de choc, pouvant être activés ou désactivés, qui comportent une pluralité d'éléments absorbeurs d'énergie et sont configurés de telle sorte que, lors de l'activation des moyens d'absorption d'énergie de choc, une partie avant du véhicule est déployée, pivotée vers l'extérieur et/ou poussée vers l'extérieur à l'encontre du sens du choc, et en ce que l'espace intermédiaire provoqué par le déploiement, le pivotement vers l'extérieur et/ou la poussée vers l'extérieur de la partie avant est rempli au moins en partie d'éléments absorbeurs d'énergie, **caractérisé en ce que** les éléments absorbeurs d'énergie peuvent être activés de manière sélective pour que le nombre des éléments absorbeurs d'énergie activés soit adapté à un cas de choc détecté.

2. Véhicule selon la revendication 1, **caractérisé en ce qu'**il comporte une pluralité d'éléments automobiles, en particulier des wagons, et les moyens d'absorption d'énergie de choc sont configurés de telle sorte que, lors de l'activation des moyens d'absorption d'énergie de choc, au moins les espaces intermédiaires existant entre deux éléments automobiles voisins et séparés du véhicule sont remplis au moins en partie par les éléments absorbeurs d'énergie.

3. Véhicule selon l'une quelconque des revendications 1 ou 2, **caractérisé en ce que**, lors de l'activation des moyens d'absorption d'énergie de choc, la partie avant est déployée, pivotée vers l'extérieur et/ou poussée vers l'extérieur sur une distance comprise entre 100 mm et 1 000 mm, de préférence environ 500 mm, en particulier à l'aide d'éléments de guidage et d'actionneurs.

4. Véhicule selon l'une quelconque des revendications précédentes, **caractérisé en ce que** la partie avant pouvant être déployée, pivotée vers l'extérieur et/ou poussée vers l'extérieur comporte des tampons un et/ou des éléments de caisse de wagon du module de tête.

5. Véhicule selon l'une quelconque des revendications précédentes, **caractérisé en ce que** la partie avant pouvant être déployée comporte le revêtement avant et les éléments de signalisation, mais pas l'attelage avant.

6. Véhicule selon l'une quelconque des revendications précédentes, **caractérisé en ce que** la partie avant pouvant être déployée, à partir du bord inférieur du pare-brise, comporte le revêtement avant ainsi que les composants apposés en dessous, en particulier l'éclairage, le klaxon et la mécanique pivotante de la porte avant.

7. Véhicule, en particulier véhicule sur rail, comportant un certain nombre d'éléments automobiles, en particulier wagons, et un dispositif de consommation d'énergie de choc, qui présente des moyens d'absorption d'énergie de choc, pouvant être activés ou désactivés, lesquels comportent une pluralité d'éléments absorbeurs d'énergie et sont configurés de telle sorte que, lors de l'activation des moyens d'absorption d'énergie de choc, au moins les espaces intermédiaires existant entre deux éléments voisins et espacés du véhicule sont remplis au moins en partie d'éléments absorbeurs d'énergie, **caractérisé en ce que** les éléments absorbeurs d'énergie peuvent être activés de manière sélective de telle sorte que le nombre des éléments absorbeurs d'énergie activés peut être adapté à un cas de choc détecté.

8. Véhicule selon l'une quelconque des revendications précédentes, **caractérisé en ce qu'**il comporte un certain nombre d'éléments automobiles voisins, en particulier des wagons, entre lesquels se trouvent des espaces intermédiaires, et **en ce que**, dans les espaces intermédiaires se trouvant plus près du côté du choc, un nombre plus élevé d'éléments absorbeurs d'énergie sont déployés, pivotés vers l'extérieur et/ou poussés vers l'extérieur dans les espaces intermédiaires et/ou on peut obtenir un niveau de force plus élevé des éléments absorbeurs d'énergie que dans la zone d'extrémité du véhicule sur rail.

9. Véhicule selon l'une quelconque des revendications précédentes, **caractérisé en ce que** l'activation du nombre d'éléments absorbeurs d'énergie et/ou leur niveau de force est adaptée à la vitesse du véhicule sur rail et/ou à la vitesse du déplacement relatif entre le véhicule sur rail et l'obstacle provoquant le choc, par exemple un véhicule arrivant dans le sens inverse.

10. Véhicule selon l'une quelconque des revendications précédentes, **caractérisé en ce que**, à des vitesses faibles, aucun ou seulement un petit nombre d'éléments absorbeurs d'énergie sont activés et/ou, pour des vitesses moyennes, une partie des éléments absorbeurs d'énergie est activée et/ou pour des vitesses élevées, l'ensemble ou un grand nombre d'éléments absorbeurs d'énergie sont activés.

11. Véhicule selon l'une quelconque des revendications précédentes, **caractérisé en ce qu'**au moins un des éléments absorbeurs d'énergie est disposé de manière pivotante dans sa position à l'aide d'une cinématique par levier.

12. Véhicule selon la revendication 11, **caractérisé en ce que** lors de l'activation, l'élément absorbeur d'énergie peut être pivoté dans une position dans laquelle un élément absorbeur d'énergie, en particulier un élément absorbeur d'énergie tubulaire, peut recevoir de manière axiale la force active.

13. Véhicule selon l'une quelconque des revendications précédentes, **caractérisé en ce que** l'élément absorbeur d'énergie est intégré à l'état désactivé dans une enceinte existante, en particulier dans ou à une caisse de wagon.

14. Véhicule selon l'une quelconque des revendications précédentes, **caractérisé en ce qu'**au moins un des éléments absorbeurs d'énergie est un élément absorbeur d'énergie pouvant être actionné de manière réversible.

15. Véhicule selon l'une quelconque des revendications précédentes, **caractérisé en ce que** l'activation des moyens d'absorption d'énergie de choc est réalisée à l'aide d'un commutateur.

16. Véhicule selon l'une quelconque des revendications précédentes, **caractérisé en ce que** l'activation des moyens d'absorption d'énergie de choc est réalisée à l'aide d'un dispositif de commutation, qui est accouplé aux systèmes de sécurité existants, en particulier un airbag et/ou un assistant de freinage.

17. Véhicule selon l'une quelconque des revendications précédentes, **caractérisé en ce qu'**il comprend des moyens d'identification d'un choc se profilant et de communication des données correspondantes, des moyens d'évaluation des données, moyennant quoi, en fonction de l'évaluation des données, les moyens d'absorption d'énergie de choc peuvent être activés ou désactivés.

18. Véhicule selon la revendication 17, **caractérisé en ce que** les moyens d'identification comportent des capteurs permettant d'enregistrer les données de l'état de circulation actuel, d'identifier l'environnement, en particulier un obstacle, les informations de trajectoire et/ou des véhicules se trouvant à proximité.

19. Véhicule selon l'une quelconque des revendications 17 ou 18, **caractérisé en ce que** les moyens d'évaluation comportent une logique d'évaluation qui exploite les données, évalue la situation et déclenche le cas échéant les moyens d'absorption d'énergie de choc.

20. Dispositif de consommation d'énergie de choc pour un véhicule, en particulier un véhicule sur rail, qui présente des moyens d'absorption d'énergie de choc, pouvant être activés ou désactivés, qui comportent un certain nombre d'éléments absorbeurs d'énergie et sont configurés de telle sorte que, lors de l'activation des moyens absorbeurs d'énergie de choc, au moins les espaces intermédiaires existant entre deux éléments voisins et espacés du véhicule sont en partie remplis d'éléments absorbeurs d'énergie, **caractérisé en ce que** les éléments absorbeurs d'énergie peuvent être actionnés de manière sélective de telle sorte que le nombre des éléments absorbeurs d'énergie activés est adapté à un cas de choc détecté.
